# EUROPÄISCHE PATENTSCHRIFT

(11) **EP 3 068 732 B1**
(45) Veröffentlichungstag und Bekanntmachung des Hinweises auf die Patenterteilung: **29.11.2017**
(21) Anmeldenummer: 14827711.4
(22) Anmeldetag: 13.11.2014
(51) Int. Cl.: C02F 1/52, C02F 3/32

(54) **VERFAHREN ZUM BEKÄMPFEN VON ALGENBLÜTE**
METHOD FOR CONTROLLING ALGAL BLOOM
PROCÉDÉ DE LUTTE CONTRE LA PROLIFÉRATION D'ALGUES

(30) Priorität: 14.11.2013 DE 102013018977
(43) Veröffentlichungstag der Anmeldung: 21.09.2016
(73) Patentinhaber: Loser, Ulrich, 04721 Rosswein / OT Grunau (DE); Palitzsch, Wolfram, 09599 Freiberg (DE)
(72) Erfinder: PALITZSCH, Wolfram, 09599 Freiberg (DE); SCHÖNHERR, Petra, 09224 Grüna (DE)
(74) Vertreter: Rumrich, Gabriele
(86) Internationale Anmeldenummer: PCT/DE2014/100400
(87) Internationale Veröffentlichungsnummer: WO 2015/070844

(56) Entgegenhaltungen:
- US-A- 4 946 557
- US-A- 5 607 552
- US-A- 6 132 625
- US-A1- 2010 300 962

## Beschreibung

Die vorliegende Erfindung betrifft ein Verfahren zum Bekämpfen von Algenblüte, mit welchem eine direkte Bekämpfung sowohl von Algenblüte (Schwimmteppich) als auch von im Wasser verteilten Algen und/oder Bakterien (insbesondere Cyanobakterien bzw. Blaualgen) erfolgt. Das Verfahren stellt eine ökologisch vorteilhafte und wirksame Methode für die Reinhaltung von Oberflächengewässern dar.

In eutrophierten Gewässern wird in Abhängigkeit von der Jahreszeit regelmäßig eine starke Vermehrung von frei im Wasser lebender Organismen (besonders Grün- und Blaualgen) beobachtet, die sogenannte Algenblüte. Die entsprechenden Photosynthetiker, zum Beispiel Cyanobakterien, benötigen für ihr Überleben Nährstoffe und Licht. Bei höherem Nährstoffangebot ist auch ein schnelleres Anwachsen der Biomasse beobachtet worden. Aufgrund von Cyanobakterien wird häufig von gesundheitlichen Risiken gesprochen, weil die von den Cyanobakterien produzierten Substanzen giftig sind. Es werden Cyanotoxine freigesetzt, die für Menschen und Tiere schädlich sind oder gar tödlich wirken können. Deshalb wurde versucht, die Entstehung von Blaualgenmassen zu vermindern, indem man die für das Algenwachstum notwendigen anorganischen Phosphate minimiert. Ein wesentlicher Beitrag dafür sollten die strengen Einleitwerte für Phosphor auf Kläranlagen sein.

Da aber der Phosphorbedarf dieser Organismen sehr gering zu sein scheint und Phosphate mit allen kommunalen Abwässern, aber auch über Einträge aus der Landwirtschaft den Gewässern zugeführt werden, ist eine wirksame Steuerung in Richtung eines oligotrophen Gewässers kaum möglich. Die Algen durch Anwendung von Bioziden zu vernichten ist fragwürdig, da diese Substanzen natürlich auch für andere Wasserorganismen toxisch sind.

Als weiteres Beispiel findet sich in der Literatur das US Patent Nr. US 2593529. Es beschreibt den Einsatz eines Ethylamin-Acetates gegen Algen in offenen Gewässern mit Konzentrationen, die für Fische allerdings bereits schädlich sind. Immer wieder stößt man bei Recherchen auf Vorschläge, die im Wesentlichen auf Kupfer-, Bor- oder quartären Ammonium-Verbindungen beruhen, die allesamt nicht für eine Anwendung in offenen Gewässern geeignet sind, sondern allenfalls unter Aquarianern diskutiert werden.

Aus der Literatur ist weiterhin bekannt, dass Kombinationen aus kolloidalem Kieselsäuresol und wasserlöslichem kationischen Polymeren zu einer Reduktion von Trüben führen (DE 696 18 029 T2), jedoch mit mässigem Erfolg, da Trübungswerte lediglich um 5NTU erreicht werden.

Weiterhin ist es aus Dokument US 2010/ 0300962 bekannt, kationische Stärke in Kombination mit einem Aluminiumsalz zur Entfernung von Algen aus Abwasser zu verwenden. Aufgabe war es daher, ein Verfahren zu entwickeln, das es ermöglicht, eine Cyanobakterien enthaltende Biomasse elegant zu sammeln und zu verkapseln, und zwar ökologisch, ohne andere Wasserorganismen zu schädigen.

Die Aufgabe wird gelöst durch ein Verfahren, mit welchem eine Abtrennung von im Wasser verteilten Cyanobakterien erfolgt, wobei erfindungsgemäß durch Dosierung eines sauren, kationischen Kieselsoles die Cyanobakterien gebunden und sedimentiert werden.

Die im Wasser verteilten Cyanobakterien liegen dabei bevorzugt in Form von mit bloßem Auge erkennbaren Bakterienkolonien, besonders bevorzugt in Form von Teppichen und/oder frei schwimmenden Anhäufungen vor.

Dabei werden allein durch Dosierung eines sauren, kationischen Kieselsoles mit einer Konzentration von 0,1 bis 50% die Cyanobakterien gebunden und eingekapselt.

Das erfindungsgemäße Verfahren erlaubt es dabei, auch bei Vorhandensein einer fein verteilten, aber noch mit bloßem Auge erkennbaren Biomasse stabile Aggregate zu erzeugen, die gegebenenfalls mechanischen Kräften bei der Anwendung physikalischer Separationstechniken standhalten.

Die weiter verbreiteten anionischen Kieselsole, wie Sie beispielsweise für die Behandlung von Lebensmitteln zur Beseitigung von Trüben (DE 102 29 047 A1) oder für die Behandlung von Abwässern und Schlämmen (JP H04 - 45 900 A) eingesetzt werden, zeigen dagegen keine Wirkung.

Bevorzugt sind die Kieselsole wässrige Lösungen kolloid dispergierter amorpher Siliciumdioxid-Partikel, die mittlere SiO₂-Teilchendurchmesser von 1 bis 300 Nanometer aufweisen.

Weiterhin bevorzugt beträgt der SiO₂- bzw. Feststoffgehalt der Kieselsole in Abhängigkeit von der Teilchengröße etwa 0,1 bis 50%.

Die positiv-geladenen, kolloidalen SiO₂-Partikel des Kieselsoles docken direkt an der Oberfläche der Bakterienkolonien an und umhüllen diese fest, wodurch die gesamte Biomasse ausgefällt werden kann. Die kationischen SiO₂-Partikel gehen dabei mit den Hüllproteinen oder S-Layern der Mikroorganismen feste Bindungen ein und beschweren dadurch die Mikroorganismen. Das behandelte Material beginnt sofort zu sedimentieren. Das schnelle Absinken der Biomasse bewirkt Lichtentzug für die Photosynthetiker und hemmt deren Vermehrung.

Da anionische Kieselsole z.B. durch Versetzen mit einer Aluminiumsalz-Lösung im sauren pH-Bereich modifiziert werden, wobei die Partikeloberfläche durch Reaktion mit den höher wertigen Metall-Ionen eine Ladungsumkehr erfährt und die Partikeloberfläche demzufolge positiv geladen wird, sind die resultierenden kationischen Kieselsole insgesamt sauer, was ein zusätzlicher willkommener Nebeneffekt ist, da mit Auftreten von Algenblüte üblicherweise auch ein Anstieg des pH-Wertes einhergeht. Messwerte von pH 9 und höher sind dabei keine Seltenheit. Ein saures, kationisches Kieselsol wirkt dem entgegen und hilft nebenbei, den entgleitenden pH-Wert des Ökosystemes auf mildem Wege wieder zu normalisieren.

Aufgrund der Zusammensetzung des Behandlungsmittels gelangen keine zusätzlichen Mengen an Chlorid oder Sulfat in das Ökosystem, so wie es beispielsweise beim Einsatz von Aluminium- oder Eisensalzlösungen zur Phosphatreduktion der Fall wäre. Ein Aufsalzen des Oberflächengewässers kann vermieden werden.

Das erfindungsgemäß eingesetzte Kieselsol stellt eine wässrige Lösung von amorphen Siliziumdioxid dar. Daher kann ein Verkieseln der Biomasse mit natürlich vorkommenden Kieselalgen und deren Aktivitäten verglichen werden, so dass im Sedimentbereich eines Gewässers lediglich SiO₂ abgelagert wird, welches ohnehin natürlich vorliegt und somit am Grund des Gewässers verbleiben kann.

Alternativ kann die behandelte Biomasse über handelsübliche Filter abgetrennt und dem System entnommen werden. Anschließend kann sie einer weiteren Verwertung zugänglich gemacht werden.

Langzeitversuche mit derart behandelten Sedimenten bestätigten die Stabilität der silikatischen Hülle. Selbst über Monate hinweg konnte keine freie Blaualgenpopulation außerhalb des Sedimentes nachgewiesen werden, obwohl das Material durch Schütteln mehrfach gestresst wurde. In allen Fällen blieb das Material kompakt und schwer genug für eine rasche erneute Sedimentation. Das Risiko von Rücklöseeffekten, wie etwa für Phosphat aus eisen- bzw. aluminiumhaltigen Sedimenten wird minimiert.

Die Erfindung wird nachfolgend anhand eines Ausführungsbeispieles näher erläutert, ohne dabei auf dieses beschränkt zu sein.

Zwei Bechergläser mit jeweils 1000 ml eines realen Oberflächenwassers mit einer Blaualgenpopulation (Trübung über Messbereich) wurden mit 0,5 ml einer 15%igen kationischen Kieselsol Lösung mit den Parametern Dichte: 1,22g/l, 30% Feststoffgehalt, pH 4, spezifische Oberfläche 160 - 210 m²/g behandelt. Die Biomasse agglomerierte sofort und sank zu Boden. Unter dem Mikroskop konnte direkt in-situ beobachtet werden, wie sich die SiO₂-Partikel an den Zellwänden der Algen bzw. Proteinhüllen der Blaualgen anlagern und diese komplett umhüllen. Ein Becherglas wurde einen Monat lang bei 6°C im Kühlschrank beobachtet, mit dem Ergebnis, dass die Sedimentationsschicht nicht wieder aufschwamm. Die Trübung des Überstandes wurde mit 0,6 TE/F bestimmt. Das zweite Becherglas wurde bei Zimmertemperatur unter Lichteinfluss einen Monat beobachtet. Auch hier kam es zu keiner Veränderung. Der Niederschlag blieb über die gesamte Zeit am Boden. Der optisch klare Überstand hatte lediglich eine Trübung von 0,5 TE/F. Beide Gläser wurden gelengentlich geschüttelt, wobei sich nach wenigen Minuten der vorherige Zustand wieder einstellte. Nach der Beobachtungsphase wurden die Proben aufgerührt und über Papierfilter filtriert. Die klaren Filtrate blieben den folgenden Monat unter Beobachtung - es bildeten sich keine neuen Algen- bzw. Cycanobakterienpopulationen.

## Patentansprüche

1. Verfahren zum Bekämpfen von Algenblüte, mit welchem eine Abtrennung von im Wasser verteilten Cyanobakterien erfolgt, **gekennzeichnet dadurch, dass** durch Dosierung eines sauren, kationischen Kieselsoles die Cyanobakterien gebunden und sedimentiert werden.

2. Verfahren nach Anspruch 1, **dadurch gekennzeichnet, dass** die Kieselsole wässrige Lösungen kolloid dispergierter amorpher Siliciumdioxid-Partikel sind, die mittlere SiO₂-Teilchendurchmesser von 1 bis 300 Nanometer aufweisen.

3. Verfahren nach Anspruch 1 oder 2, **dadurch gekennzeichnet, dass** der SiO₂- bzw. Feststoffgehalt der Kieselsole in Abhängigkeit von der Teilchengröße etwa 0,1 bis 50% beträgt.

4. Verfahren nach einem der Ansprüche 1 bis 3, **dadurch gekennzeichnet, dass** die behandelte Biomasse abfiltriert und dem System entnommen wird.

5. Behandlung von schwimmenden Teppichen aus blaualgenhaltiger Biomasse auf Oberflächengewässern durch Aufsprühen oder Untermischen eines kationischen Kieselsoles mit einem Verfahren nach einem der Ansprüche 1 bis 4.

## Claims

1. A method for combating algae blooms, with which a separation of cyanobacteria distributed in the water takes place, **characterized in that** the dosage of an acidic cationic silica sol is used to bind and sediment the cyanobacteria.

2. A method according to claim 1, **characterized in that** the silica sols are aqueous solutions of colloidally dispersed amorphous silica particles which have average SiO₂ particle diameters of 1 to 300 nanometers.

3. A method according to claim 1 or 2, **characterized in that** the SiO₂ or solids content of the silica sol is about 0.1 to 50% depending on the particle size.

4. A method according to one of the claims 1 to 3, **characterized in that** the treated biomass is filtered off and removed from the system.

5. Treatment of floating carpets of biomass containing blue algae on surface waters by spraying or mixing a cationic silica sol with a method according to one of the claims 1 to 4.

## Revendications

1. Procédé pour lutter contre la prolifération des algues qui réalise une séparation des cyanobactéries dispersées dans l'eau, **caractérisé en ce que** les cyanobactéries sont liées et sédimentées par l'ajout d'un sol de silice acide cationique.

2. Procédé selon la revendication 1, **caractérisé en ce que** les sols de silice sont des solutions aqueuses de particules de dioxyde de silicium amorphe en dispersion colloïdale présentant un diamètre moyen des particules de SiO₂- de 1 à 300 nanomètres.

3. Procédé selon la revendication 1 ou 2, **caractérisé en ce que** la teneur en SiO₂- ou en solides des sols de silice est comprise entre environ 0,1 et 50 %, selon la taille des particules.

4. Procédé selon l'une des revendications 1 à 3, **caractérisé en ce que** la biomasse traitée est extraite par filtration et retirée du système.

5. Traitement de nappes flottantes de biomasse contenant des algues bleues sur les eaux de surface par pulvérisation et mélange d'un sol de silice cationique par un procédé selon l'une des revendications 1 à 4.
